# EUROPÄISCHE PATENTSCHRIFT

(11) **EP 2 465 665 B1**
(45) Veröffentlichungstag und Bekanntmachung des Hinweises auf die Patenterteilung: **29.03.2017**
(21) Anmeldenummer: 11186121.7
(22) Anmeldetag: 21.10.2011
(51) Int. Cl.: B29C 63/24, B29C 70/08, B29C 70/86, B62D 29/00, B29K 105/08, B29C 53/58

(54) **Verfahren zur Herstellung eines materialhybriden Bauteils**
Method for producing a hybrid material component
Procédé de fabrication d'un composant en matériau hybride

(30) Priorität: 15.12.2010 DE 102010063094
(43) Veröffentlichungstag der Anmeldung: 20.06.2012
(60) Teilanmeldung: 17153552.9
(73) Patentinhaber: Bayerische Motoren Werke Aktiengesellschaft, 80809 München (DE)
(72) Erfinder: Behrendt, Franz-Peter, 81371 München (DE)

(56) Entgegenhaltungen:
- EP-A1- 1 262 374
- EP-A1- 1 698 410
- DE-A1- 3 711 258
- DE-A1- 3 843 488
- DE-A1- 10 158 627
- GB-A- 2 222 653
- US-A1- 2009 148 700
- US-A1- 2010 083 815
- JUNG D W ET AL: "Aluminum-GFRP hybrid square tube beam reinforced by a thin composite skin layer", COMPOSITES PART A: APPLIED SCIENCE AND MANUFACTURING, ELSEVIER SCIENCE PUBLISHERS B.V., AMSTERDAM, NL, Bd. 40, Nr. 10, 1. Oktober 2009 (2009-10-01), Seiten 1558-1565, XP026613352, ISSN: 1359-835X, DOI: 10.1016/J.COMPOSITESA.2009.06.015 [gefunden am 2009-07-01]
- Anonymous: "Spritzpressen - Wikipedia", Wikipedia, 14 August 2011 (2011-08-14), pages 1-4, XP055206335, Retrieved from the Internet: URL:https://de.wikipedia.org/w/index.php?t itle=Spritzpressen&oldid=92428436 [retrieved on 2015-08-05]
- Anonymous: "Innenhochdruckumformen - Wikipedia", Wikipedia, 10 August 2011 (2011-08-10), XP055206338, Retrieved from the Internet: URL:https://de.wikipedia.org/w/index.php?t itle=Innenhochdruckumformen&oldid=92277367 [retrieved on 2015-08-05]

## Beschreibung

Die Erfindung betrifft ein Verfahren zur Herstellung eines materialhybriden Bauteils mit einem metallischen Hohlprofil und einer daran angeordneten Ummantelung.

Um faserverstärkte Hohlprofile mit geometrischem Hinterschnitt herzustellen, werden im Stand der Technik verlorene Kerne verwendet. Diese werden zumeist als massive Kerne aus Sand oder als hohle Blasformkerne aus thermoplastischem Kunststoff realisiert, auf die faserverstärktes Kunststoffmaterial aufgebracht wird. Im fertigen Bauteil haben die Sand- bzw. Blasformkerne jedoch keine Funktion. Sandkerne müssen aus dem fertigen Bauteil herausgelöst oder gespült werden. Blasformkerne keine bei Hinterschneidungen in der Regel nicht entfernt werden und müssen im Inneren verbleiben. Dies Führt unnötigerweise zu einem erhöhten Gewicht.

Die GB 2 222 653 A zeigt ein Verfahren zur Herstellung von Verbundrohren mit einem nicht kreisförmigen Querschnitt, beispielsweise einem kastenförmigen Querschnitt, bei dem dünne kreisrunde Kunststoff- oder Metallrohre mit einer ungehärteten glasfaserverstärkten Ummantelung versehen werden, die Querschnittsform in einer Werkzeugkavität umgeformt wird und die Ummantelung vor Ort ausgehärtet wird.

Aus der US 2009/0148700 A1 ist ein RTM-Verfahren bekannt, bei dem Verbundbauteile hergestellt werden, in dem in einem trockenen Preform Verbundteile aus Prepregs eingebracht werden. Diese Prepregs sind vorimprägniert mit einem ersten Harz und teilweise polymerisiert. Diese Baugruppe wird anschließend in eine Kavität eingelegt und ein zweites Harz injiziert. Das zweite Harz imprägniert die trockenen Fasern. Beide Harze werden simultan polymerisiert.

Aus der DE 101 58 627 A1 sind Trägerstrukturen zur Aufnahme von Kräften und Verformungsenergie bekannt, wobei die Trägerstruktur eine Schichtstruktur mit mindestens zwei Schichten aufweisen, wobei mindestens eine erste Schicht aus einem aufgeschäumten Metallschaum besteht und mindestens eine zweite Schicht eine Trägerschicht bildet.

Aus der DE 38 43 488 A1 ist eine Wickelanlage mit einem Drehantrieb um eine Rotationsachse, mit einer Maschinensteuerung, mit einer Werkstückeinspannvorrichtung, einer Fadenzuführeinrichtung und mit einem koaxial zur Rotationsachse angeordneten Ringfadenauge, das ein Werkstück konzentrisch umgibt, bekannt.

Die Entgegenhaltung US 2010/0083815 A1 betrifft ein faserverstärktes Kunststoffbauteil, das insbesondere als Dachseitenrahmen eines Fahrzeugs verwendet wird und ein Verfahren zur Herstellung eines faserverstärkten Kunststoffbauteils sowie eine Vorrichtung dazu.

Die EP 1 698 410 A1 betrifft ein gerades Stahlrohr, für Fluidumformverfahren, insbesondere zur Herstellung einer A-Säule, B-Säule oder C-Säule eines Fahrzeugs.

Die EP 1 262 374 A1 betrifft ein Energieabsorptionselement, zur Verwendung in einem Fahrzeug, das geeignet ist im Falle eines Unfalls, die Crash-Energie zu absorbieren.

Der Artikel "Aluminium-GFRP hybrid square tube beam reinforced by a thin composite skin layer" von Hyung et. al. untersucht das Verformungsverhalten von Hybridbauteilen mit einer rechteckigen Querschnittsform, die mit glasfaserverstärktem Kunststoff verstärkt sind.

Ausgehend von diesem Stand der Technik macht es sich die vorliegende Erfindung zur Aufgabe, ein vereinfachtes Verfahren anzugeben, mit dem die Nachteile des Standes der Technik überwunden werden. Ferner ist es Aufgabe der Erfindung, ein Verfahren aufzuzeigen, mit dem besonders formstabile faserverstärkte, hohle Bauteile realisiert werden können, die dabei gleichzeitig ein geringes Gewicht aufweisen.

Diese Aufgabe wird durch ein Verfahren mit den Merkmalen des unabhängigen Anspruchs gelöst. Die abhängigen Ansprüche stellen vorteilhafte Ausführungen der Erfindung dar.

Zur Lösung dieser Aufgabe schlägt die Erfindung ein Verfahren zur Herstellung eines materialhybriden Bauteils mit einem metallischen Hohlprofil und einer daran angeordneten Ummantelung vor, unter anderem mit den Schritten:
Erzeugen des metallischen Hohlprofils mit einer vorbestimmten Querschnittsform und einem vorbestimmten Profilverlauf, Erzeugen einer Ummantelung zumindest auf einem Abschnitt einer äußeren Oberfläche des metallischen Hohlprofils. Weiterhin kann die Ummantelung aus einem mit Endlosfasern verstärkten Kunststoff gebildet werden, wobei die Endlosfasern insbesondere Kohle-, Aramid- und/oder Glasfaser sein können. Diese Endlosfasern weisen dabei eine Faserlänge von mindestens 1000mm auf.

Darüber hinaus wird das metallische Hohlprofil mittels eines Innenhochdruckumformverfahrens erzeugt.

Zusätzlich werden nach dem Erzeugen des metallischen Hohlprofils zumindest auf einen vorbestimmten Abschnitt der äußeren Oberfläche des metallischen Hohlprofils die Endlosfasern aufgebracht . Bei diesen Fasern kann es sich insbesondere um Aramid-, Kohle- und/oder Glasfasern handeln.

In einer bevorzugten Alternative des Verfahrens können die Fasern auf dem vorbestimmten Abschnitt des metallischen Hohlprofils aufgebracht werden, indem dieser mit den Endlosfasern umflochten und/oder umwickelt wird.

Weiterhin kann zumindest eine der Endlosfasern als Stehfaser ausgebildet sein und im Wesentlichen in Längsrichtung des metallhybriden Bauteils bzw. des metallischen Hohlprofils angeordnet sein. Dies bietet den Vorteil, dass das sich ergebende Fasergeflecht bzw. die Faserstruktur in einem Prozessschritt auf der äußeren Oberfläche des metallischen Hohlprofils angeordnet werden kann und somit eine besonders hohe Stabilität im späteren Gesamtbauteil erzeugt wird. Beim Umflechten des metallischen Hohlprofils wird eine Mehrzahl einzelner Endlosfasern miteinander zu einem Triaxialgeflecht verflochten, wobei zwischen Stehfasern und Flechtfasern unterschieden werden kann. Die Stehfasern bzw. Stehfäden des Triaxialgeflechts verlaufen zumindest abschnittsweise parallel zur Längsrichtung bzw. Axialrichtung des metallischen Hohlprofils. Die sogenannten Flechtfasern bzw. Flechtfäden des Triaxialgeflechts schließen einen Winkel im Bereich von 15° bis 85°, bevorzugt im Bereich von 25° - 80° zur Längsrichtung des Profilverlaufs ein. Die angegebenen Wertebereiche umfassen dabei auch die Randwerte.

Gemäß einer erfindungsgemäßen ersten Ausführungsform kann das metallische Hohlprofil mit den daran angeordneten Endlosfasern in ein Spritzpress-Werkzeug, insbesondere in ein Resin-Transfer-Moulding-Werkzeug, eingebracht werden und zumindest in dem Abschnitt, in dem die Endlosfasern angeordnet sind, eine Kunststoffmatrix, insbesondere ein Harz aufgebracht werden, wobei anschließend die Kunststoffmatrix zu einem Formteil aushärtet. Die Kombination eines im Innenhochdruckumformverfahren (IHU) hergestellten metallischen Hohlprofils, auf das in einem anschließenden RTM-Verfahren eine Kunststoff-Ummantelung aufgebracht wird bietet den Vorteil, dass die Dichtigkeit des Hohlprofils durch den IHU-Prozess bereits gewährleistet ist, so dass mit hoher Sicherheit kein Harz in den inneren Bereich des metallischen Hohlprofils dringen kann.

In einer weiteren Ausführungsform können die Endlosfasern als Prepregs vorliegen und das metallische Hohlprofil zumindest mit dem Abschnitt, in dem die Endlosfasern angeordnet sind in ein Press-Werkzeug oder in ein Autoklav eingebracht und anschließend mit Druck und/oder Temperatur beaufschlagt werden, wobei ein an den Endlosfasern befindliches Harz aushärtet. In diesem Sinne sind Prepregs Endlosfasern, die vor dem Umflechten oder Umwickeln in Harz getränkt bzw. damit vorimprägniert werden, wobei die Kunststoffmatrix bzw. das Harz zähflüssig die Faser benetzt. Derartige Prepregs sind auch als sogenannte nasse Fasern bekannt. Das Press-Werkzeug kann insbesondere ein schlauchförmiger, evakuierbarer Behälter sein, der mit Druck und/oder Temperatur beaufschlagbar ist, um das an den Fasern befindliche Harz zu einer stoffschlüssigen Matrix auszuhärten.

In einer weiteren, alternativen Ausführungsform kann das metallische Hohlprofil mit einer Mehrzahl von Endlosfasern und mindestens einem Garn umflochten und/oder umwickelt werden, wobei mindestens eine Endlosfaser eine Aramid-, Glas- und/oder Kohlefaser ist und der Garn ein Thermoplast ist oder ein Hybrid-Garn ist, der zumindest thermoplastisches Material umfasst, und das metallische Hohlprofil zumindest in dem Abschnitt, in dem die Mehrzahl von Endlosfasern angeordnet ist, in ein Press-Werkzeug, eingebracht wird, anschließend mit Druck und/oder Temperatur beaufschlagt wird, wobei die Endlosfasern aus Thermoplast oder das thermoplastische Material des Hybrid-Garns aufschmilzt, sich stoffschlüssig zu einer Kunststoffmatrix verbindet und anschließend wieder erstarrt. Dies bietet den Vorteil, dass aus dem mindestens einen Garn aus thermoplastischem Material bzw. aus dem thermoplastischen Material des Hybrid-Garns die Kunststoffmatrix der späteren faserverstärkten Ummantelung gebildet werden kann. Mit anderen Worten: Die Kunststoffmatrix wird in diesem alternativen Verfahren bereits während der Umwicklung bzw. dem Umflechten des metallischen Hohlprofils auf einen vorbestimmten Abschnitt der äußeren Oberfläche als Thermoplast-Garn bzw. als Hybrid-Garn aufgebracht. In dem Press-Werkzeug wird unter Druck und Temperatur der thermoplastische Garn bzw. das thermoplastische Material aufgeschmolzen, so dass es sich einerseits mit dem metallischen Hohlprofil und andererseits mit den Endlosfasern formschlüssig haftend verbindet. Nach dem Erstarren des thermoplastischen Materials liegt das Flechtgebilde als faserverstärkte Ummantelung vor, die in der thermoplastischen Matrix angeordnet sind. In diesem Sinne umfassen Hybrid-Garne einen Kern der aus Aramid-, Glas und/oder Kohlefaser gebildet ist und eine Hülle, die aus demselben Kunststoffmaterial gebildet ist, wie die Kunststoffmatrix des metallhybriden Bauteils.

Weiterhin kann das mit Kunststoffmatrix versehene metallische Hohlprofil aus dem Spritzpress-Werkzeug und/oder aus dem Press-Werkzeug entformt werden und an den Randbereichen des Bauteils und/oder der Ummantelung beschnitten werden.

Zusätzlich wird mindestens während des Versehens des metallischen Hohlprofils mit Kunststoffmatrix in einem inneren Hohlraum des metallischen Hohlprofils ein Innendruck erzeugt, der einem äußeren Spritzpress-Druck entgegenwirkt. Hieraus ergibt sich der Vorteil, dass der Spritzpress-Druck in dem RTM-Werkzeug erhöht werden kann und dadurch eine besonders schnelle und gute Durchdringung des Fasergeflechts mit Harz sichergestellt werden kann, wobei durch den Innendruck gleichzeitig die Gefahr von Einbeulungen oder ungewollten Verformungen des metallischen Hohlprofils und damit des gesamten Bauteils reduziert wird. Als Harz bzw. als Material für die Kunststoffmatrix eignen sich insbesondere Duroplaste, beispielsweise Epoxidharze, und/oder Thermoplaste.

Alternativ kann zumindest während des Aushärtens der Kunststoffmatrix in einem inneren Hohlraum des metallischen Hohlprofils ein Innendruck erzeugt werden, der einem äußeren Press-Druck entgegenwirkt.

Weiterhin kann im inneren Hohlraum ein Fluid, insbesondere im flüssigen oder gasförmigen Zustand, eingebracht und mit dem Innendruck beaufschlagt werden. Durch Vorsehen einer Flüssigkeit im Inneren des Hohlraums, die physikalisch bedingt inkompressibel ist, kann im Fall einer Fehlfunktion die explosionsartige Ausbreitung des druckbeaufschlagten Fluids verhindert werden und dadurch die Arbeitssicherheit erhöht werden.

In allen drei oben beschriebenen Ausführungsformen eignet sich als Harz bzw. als Material für die Kunststoffmatrix insbesondere Duroplaste, beispielsweise Epoxidharze, und/oder Thermoplaste.

Weiterhin kann das metallhybride Bauteil ein crashbeanspruchtes Strukturbauteil, insbesondere für Kraftfahrzeuge sein. Im Sinne der Erfindung sind A-, B-, C-Säulen, Seitenschweller und/oder Seitenrahmen von Kraftfahrzeugen bzw. Karosserien von Kraftfahrzeugen als derartige Strukturbauteile aufzufassen. Durch die Kombination der hohen Duktilität des metallischen Hohlprofils und der hohen Steifigkeit des faserverstärkten Kunststoffes eignen sich diese metallhybriden Bauteile als Strukturbauteile, die im Crashfall lateral mit Seitenkräften beaufschlagt werden. Das duktile, metallische Hohlprofil verhindert eine vollständige Rissbildung durch den Querschnitt der Ummantelung, so dass im Innenraum des Fahrzeugs keine gefährlichen Schnittkanten entstehen.

Im Folgenden sollen die Vorteile der vorliegenden Erfindung kurz zusammengefasst werden. Durch Vorsehen eines metallischen Hohlprofils kann ein besonders formstabiler Kern realisiert werden, der leicht zu umflechten ist und gute Handling-Eigenschaften bei der Überführung aus dem IHU-Werkzeug in das Flechtwerkzeug bzw. aus dem Flechtwerkzeug zum Spritzpress- bzw. Press-Werkzeug bietet. Dadurch erhöht sich die Prozesssicherheit des gesamten Herstellungsverfahrens. Durch Aufbringen eines Innendrucks während der Erzeugung der Ummantelung im Inneren des metallischen Hohlprofils kann dieser gestützt werden, wobei die Dichtigkeit durch den IHU-Verfahrensschritt vorab gegeben ist. Nicht zuletzt bietet die Erfindung ein Verfahren mit einer geringen Anzahl an Prozessschritten, da beispielsweise das metallische Hohlprofil als Kern im Inneren des fertigen, faserverstärkten Bauteils verbleibt und nicht herausgelöst werden muss.

Hieraus ergeben sich auch wesentlich verbesserte mechanische Eigenschaften des Gesamtbauteils in Bezug auf Längs-, Quer- und Schubsteifigkeiten bzw. deren Festigkeiten.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung
- Figur 1a - e: die Verfahrensschritte beim Ablauf des Innenhochdruckumformprozesses;
- Figur 2 a - c: je eine perspektivische Ansicht eines metallhybriden Bauteils

- Figur 3: schematisch einen Flechtvorgang
- Figur 4: einen Querschnitt durch ein RTM-Werkzeug mit einem darin befindlichen faserverstärkten Bauteil gemäß der vorliegenden Erfindung.

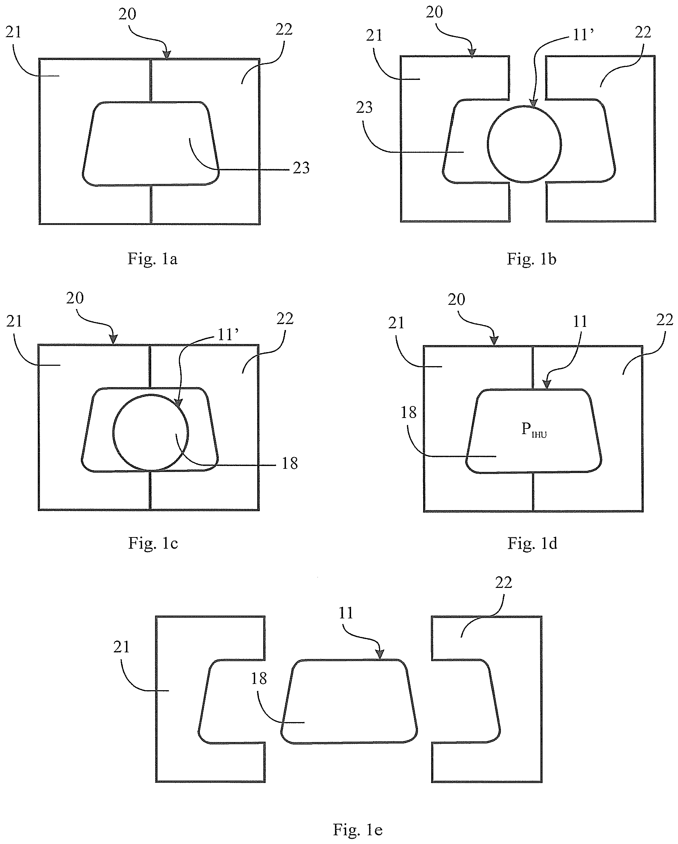

Im Folgenden soll zunächst das Innenhochdruckumformverfahren anhand der Figuren 1a bis e erläutert werden. Ein Innenhochdruckumform(IHU)-Werkzeug 20 umfasst eine erste Werkzeughälfte 21 und eine zweite Werkzeughälfte 22, die zueinander verschiebbar angeordnet sind und im Wesentlichen senkrecht zu einer Trennebene verfahrbar sind. Beispielhaft ist die Trennebene in den Figuren 1a bis 1e vertikal dargestellt, wobei jedoch auch horizontale Trennebenen oder eine Vielzahl von beliebig ausgerichteten Trennebenen denkbar ist. Die erste Werkzeughälfte 21 und die zweite Werkzeughälfte 22 schließen im Inneren eine Kavität 23 ein. In Figur 1b ist das IHU-Werkzeug 20 in einer geöffneten Stellung abgebildet, wobei in dem Bereich, der später die Kavität 23 ausbildet, ein Halbzeug 11' eingebracht wird. Aus dem Halbzeug 11' wird später das metallische Hohlprofil 11 erstellt. Bei diesem Halbzeug 11' kann es sich z.B. um ein Rohr, ein Vierkantprofil oder um ein Profil mit einer beliebigen Querschnittsfläche handeln. Auch konisch zulaufende d.h. sich verjüngende Profile sind denkbar. Bevorzugt soll hier als Material ein Profil aus Aluminium bzw. Stahl verwendet werden.

Nachdem das Halbzeug 11' in das IHU-Werkzeug 20 eingelegt wurde, werden die Werkzeughälften 21, 22 zusammengefahren, so dass sich die Kavität 23 ausbildet, in deren Inneren das Halbzeug 11' liegt, vgl. Fig 1 c. Das Halbzeug 11' weist dabei einen inneren Hohlraum 18 auf, der anschließend mit einem Umformdruck P_{IHU} beaufschlagt wird.

Unter diesem Druck verformt sich das Halbzeug 11' und nimmt die Querschnittsform der Kavität 23 an, wie beispielsweise in Figur 1d gezeigt. Dadurch wird das metallische Hohlprofil 11 gebildet.

Abschließend wird das metallische Hohlprofil 11 aus dem IHU-Werkzeug 20 entformt, indem die erste Werkzeughälfte 21 und die zweite Werkzeughälfte 22 auseinandergefahren werden, wie in Figur 1e gezeigt. Das metallische Hohlprofil 11 kann dann aus dem IHU-Werkzeug 20 entnommen werden. Grundsätzlich soll die Erfindung nicht auf die hier dargestellte Querschnittsform, die als Trapez mit abgerundeten Ecken abgebildet ist, beschränkt sein, denn erfindungsgemäß kann jede beliebige Querschnittsform Verwendung finden, somit auch runde, dreieckige, mehreckige oder daraus kombinierte Querschnittsformen.

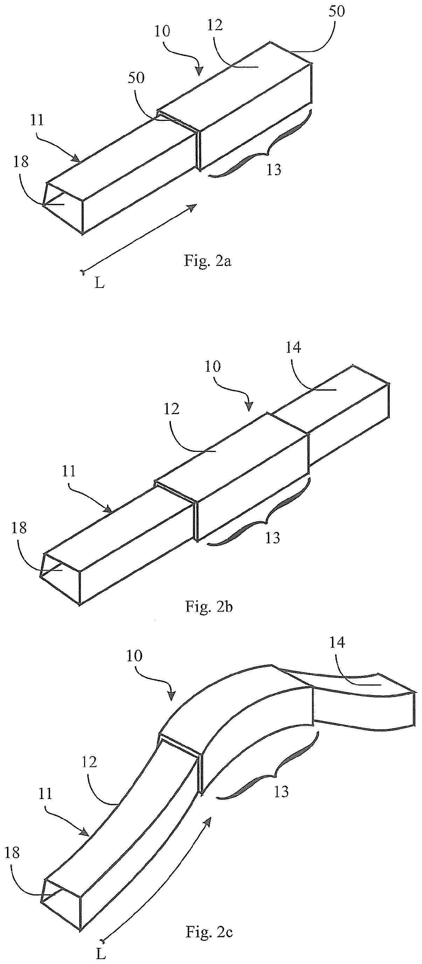

Das metallische Hohlprofil 11 hat nach dessen Herstellung im IHU-Prozess eine vorbestimmte Querschnittsform und einen vorbestimmten Profilverlauf. Wahlweise kann die Querschnittsform entlang des Profilverlaufs auch variieren, so dass sich im Wesentlichen in Längsrichtung L des Profilverlaufs verjüngende Bereiche ergeben. Wie in Figur 2c beispielhaft dargestellt ist, kann der Profilverlauf auch Hinterschneidungen bilden.

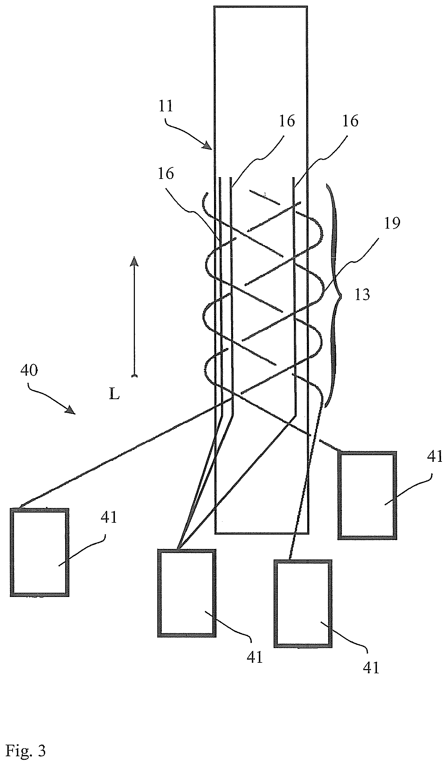

Nachdem das metallische Hohlprofil 11 aus dem IHU-Werkzeug 20 entnommen wurde, werden Fasern 16, 19 in einem vorbestimmten Abschnitt 13 auf eine Oberfläche 14 des metallische Hohlprofils 11 aufgebracht vgl. Figur 2a - c. In einer ersten Alternative des Verfahrens werden hierbei Fasern 16, 19 aufgeflochten, wie beispielweise in Figur 3 dargestellt. Dabei wird das Metallische Hohlprofil 11 durch eine Flechtvorrichtung 40 geführt, wobei es zeitgleich mit Fasern 16, 19 umflochten wird. Dabei ergibt sich ein triaxiales Geflecht aus Stehfasern bzw. Stehfäden 16, die in Längsrichtung L des metallhybriden Bauteils 10 verlaufen und Flechtfasern bzw. Flechtfäden 19, die mit der Längsrichtlung L des Bauteils 10 einen Winkel einschließen. Diese Fasern 16, 19 werden von Faserspeichern 41 abgegeben. Wahlweise können nur vorbestimmte Abschnitte 13 umflochten werden oder die Oberfläche 14 des Metallischen Hohlprofils 11 auch vollständig mit Fasern 16, 19 umflochten werden.

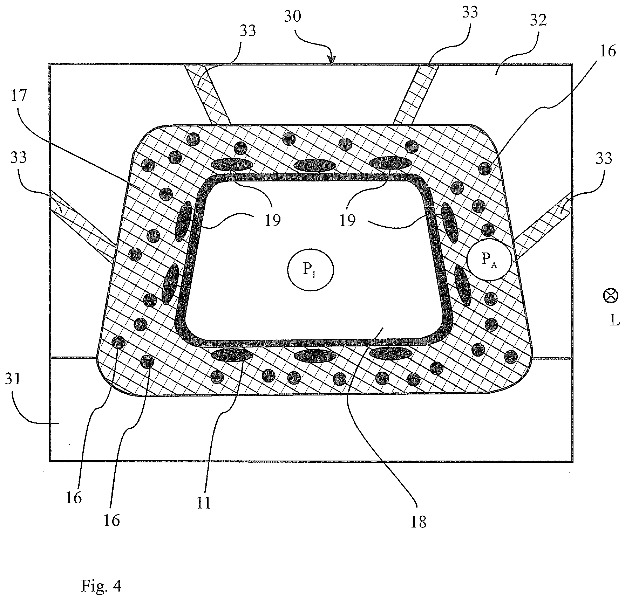

Das mit Fasern 16, 19 versehene metallische Hohlprofil 11 wird anschließend gemäß einer ersten Ausführungsform der Erfindung in ein RTM-Werkzeug eingelegt. Ein solches RTM-Werkzeug 30 ist in Figur 4 dargestellt und umfasst eine untere Werkzeughälfte 31 und eine obere Werkzeughälfte 32, die im Wesentlichen senkrecht zur Trennebene auseinander- und wieder zusammengefahren werden können. Die zwei Werkzeughälften 31, 32 bilden im zusammengefahrenen Zustand eine Kavität aus, in der das metallische Hohlprofil 11 mit daran angeordneten Fasern 16 eingelegt wird. Die obere Werkzeughälfte 32 weist Zufuhrkanäle 33 auf, die als Angüsse fungieren und über die eine Kunststoffmatrix, insbesondere Harz, in die Kavität eingebracht werden kann.

Die Kunststoffmatrix 17 wird dabei insbesondere als Harz unter Druck und Temperatur in die Kavität geleitet und durchdringt den geflochtenen Faserkomplex. In der Darstellung in Figur 4 sind die Stehfäden als kreisrunde Fasern 16 dargestellt, die sich in axialer Richtung L, d.h. im Wesentlichen parallel zum Profilverlauf erstrecken. Die Flechtfasern 19 sind in der Schnittdarstellung elliptisch dargestellt, da ihre eigene Längsachse einen Winkel mit der Längsrichtung L des Profilverlaufs einschließen.

Nachdem die Kunststoffmatrix 17 ausgehärtet ist, kann das fertige Bauteil 10 aus dem RTM-Werkzeug 30 entformt werden. Anschließend werden Randbereiche 50 der Ummantelung 12 endbeschnitten. Wie in Figur 4 dargestellt ist, wird während des RTM-Prozesses ein Innendruck P_{I} im Inneren des Hohlraums 18 des metallischen Hohlprofils 11 aufgebaut , der dem Spritzpress-Druck P_{A} entgegenwirkt. Dadurch kann zum einen ein höherer Spritzpress-Druck P_{A} angelegt werden, so dass das Harz 17 besonders gut die Faserschicht mit den Fasern 16 durchdringen kann und zum anderen gewährleistet werden, dass sich keine ungewollten Verformungen am Bauteil ergeben. Der Spritzpress-Druck P_{A} kann dabei in einem Bereich von 1 bis 100 Bar, bevorzugt ca. 80 Bar, betragen.

Im Folgenden soll eine zweite Ausführungsform erläutert werden, die sich von der erfindungsgemäßen ersten Ausführungsform
dadurch unterscheidet, dass nicht ein RTM-Verfahren verwendet wird, um die Kunststoffmatrix der Ummantelung 12 zu bilden, sondern dass diese in einem Press-Verfahren hergestellt wird. Wie in der ersten Ausführungsform des Verfahrens erfolgt die Herstellung des metallischen Hohlprofils 11 im IHU-Prozess. Anschließend wird in vorbestimmten Bereichen 13 der Oberfläche 14 des metallischen Hohlprofils 11 mindestens ein Prepreg aufgebracht. Bei diesen Prepregs handelt es sich um Fasern, insbesondere Kohle-, Aramid- oder Glasfaser, die dabei vorab mit einer Kunststoffmatrix oder Harz getränkt bzw. vorimpregniert sind. Durch Beaufschlagung mit Druck und/oder Temperatur härtet die Kunststoffmatrix bzw. das Harz aus und bildet so die Ummantelung 12. Hierzu wird das Metallische Hohlprofil 11 mit den angeordneten Prepregs in ein Press-Werkzeug eingelegt. Aufgrund der Anordnung der Prepregs um das metallische Hohlprofil 11 herum eignet, sich hierfür ein elastisches, im Wesentlichen schlauchförmiges Werkzeug, das zumindest über den Bereich, der mit Prepregs umgeben ist, gestülpt wird. Anschließend wird das schlauchförmige Press-Werkzeug geometrisch zusammengezogen. Hierfür kann wahlweise im Inneren des Press-Werkzeugs ein Unterdruck bis hin zu einem Vakuum erzeugt werden und/oder an der Außenseite des Press-Werkzeugs ein Überdruck angelegt werden. Durch den Druck und die zusätzliche Beaufschlagung mit Temperatur wird das Harz der einzelnen Prepregs miteinander aufgeschmolzen, miteinander stoffschlüssig verbunden und ausgehärtet. Abschließend kann dann das fertige Bauteil, das ein metallisches Hohlprofil 11 und eine Ummantelung 12 umfasst, aus dem Press-Werkzeug entformt werden. Alternativ zum Press-Werkzeug kann auch ein Autoklav Verwendung finden, um Ummantelung 12 aus Prepregs herzustellen.

Im Folgenden soll eine dritte Ausführungsform erläutert werden, bei dem ein im IHU-Verfahren hergestelltes metallisches Hohlprofil 11 umflochten oder umwickelt wird, wobei zum einen Aramid-, Kohle- und/oder Glasfasern und andererseits ein oder mehrere Garne aus einem Thermoplast verwendet werden, um ein Geflecht mit einer hohen Stabilität und hohen Materialkennwerten zu erzeugen. Diese Thermoplaste werden später aufgeschmolzen, d.h. in einen flüssigen Zustand überführt, so dass sie miteinander stoffschlüssig zu einer Matrix verschmelzen, um nach dem Erstarren die Kunststoff- oder Harzmatrix der Ummantelung 12 auszubilden. Um die Thermoplaste in einen fliesförmigen Zustand zu überführen, wird das Metallisches Hohlprofil 11 mit daran angeordnetem Fasergeflecht in ein Press-Werkzeug eingebracht, in dem die Fasern mit Temperatur und Druck beaufschlagt werden können. Ein solches Press-Werkzeug wurde bereits oben in Bezug zur zweiten Ausführungsform erläutert.

In einer zweiten Alternative der dritten Ausführungsform wird anstatt des Garns aus Thermoplast ein sogenanntes Hybrid-Garn verwendet. Solche Hybrid-Garne umfassen ein Monofil, beispielsweise aus Kohle-, Aramid- und/oder Glasfaser und eine daran angeordnete Umhüllung aus Thermoplast. Wie bereits in der ersten Alternative der Ausführungsform beschrieben, wird auch hier zuerst ein Geflecht erzeugt, welches anschließend in einem Press-Werkzeug oder einem Autoklav mit Temperatur und/oder Druck beaufschlagt wird. Die thermoplastischen Anteile des Hybridgarns schmelzen dabei, durchdringen das Geflecht, verbinden sich stoffschlüssig und erstarren zu der Kunststoffmatrix aus, die wie in der ersten Alternative die Kunststoffmatrix der Ummantelung ausbildet.

In ersten und zweiten Ausführungsformen wird das metallische Hohlprofil 11, wenn es in das Spritzpress-Werkzeug 30 oder jeweils das Press-Werkzeug eingebracht wird, derart gegenüber dem Werkzeug abgedichtet, dass eine Dichtheit entsteht, die verhindert, dass Harz zwischen dem jeweiligen Werkzeug und dem metallischen Hohlprofil 11 herausquellen kann. Im Gegensatz dazu müssen in der zweiten Ausführungsform Öffnungen in dem Press-Werkzeug vorgesehen sein, die ein definiertes abfließen des Harzes zulassen, wenn die Prepregs mit Druck beaufschlagt werden. Ferner kann zusätzlich oder alternativ in allen drei beschriebenen Ausführungsformen der innere Hohlraum 18 des Metallisches Hohlprofils 11 mit einem Innendruck P_{I} beaufschlagt werden. Dieser Innendruck kann in einem Bereich von 1300 bis 2800 bar liegen, wobei die Randbereiche mit umfasst sein sollen.

## Patentansprüche

1. Verfahren zur Herstellung eines materialhybriden Bauteils (10) mit einem metallischen Hohlprofil (11) und einer daran angeordneten Ummantelung (12), mit den Schritten:
- Erzeugen des metallischen Hohlprofils (11) mit einer vorbestimmten Querschnittsform und einem vorbestimmten Profilverlauf, wobei das metallische Hohlprofil (11) mittels eines Innenhochdruckumformverfahrens erzeugt wird
- Erzeugen einer Ummantelung (12) zumindest auf einem Abschnitt (13) einer äußeren Oberfläche (14) des metallischen Hohlprofils (11), wobei die Ummantelung (12) aus einem mit Endlosfasern (16, 19) verstärkten Kunststoff gebildet wird, wobei die Endlosfasern (16, 19) insbesondere Kohle-, Aramid- und/oder Glasfasern sind und nach dem Erzeugen des metallischen Hohlprofils (11) zumindest auf einen vorbestimmten Abschnitt (13) der äußeren Oberfläche (14) des metallischen Hohlprofils (11) die Endlosfasern (16, 19) aufgebracht werden, und das metallische Hohlprofil (11), mit den daran angeordneten Endlosfasern (16, 19) in ein Spritzpress-Werkzeug (30), insbesondere in ein Resin-Transfer-Moulding-Werkzeug, eingebracht wird und zumindest in dem Abschnitt, in dem die Endlosfasern (16, 19) angeordnet sind eine Kunststoffmatrix (17), insbesondere ein Harz aufgebracht wird und anschließend die Kunststoffmatrix (17) zu einem Formteil aushärtet.
**dadurch gekennzeichnet, dass**
- die Endlosfasern (16, 19) auf den vorbestimmten Abschnitt (13) des metallischen Hohlprofils (11) aufgebracht werden, indem dieser mit den Endlosfasern (16, 19) umflochten und/oder umwickelt wird, wobei zumindest während des Aufbringens der Kunststoffmatrix (17) in einem inneren Hohlraum (18) des metallischen Hohlprofils (11) ein Innendruck (P_{I}) erzeugt wird, der einem äußeren Spritzpress-Druck (P_{A}) entgegenwirkt..

2. Verfahren nach Anspruch 1, **dadurch gekennzeichnet, dass**
- zumindest eine der Endlosfasern (16, 19) als Stehfaser (16) ausgebildet ist und im Wesentlichen in Längsrichtung (L) des metallhybriden Bauteils (10) angeordnet ist.

3. Verfahren nach einem der vorgehenden Ansprüche, **dadurch gekennzeichnet, dass**
das metallhybride Bauteil (10) ein crashbeanspruchtes Strukturbauteil, insbesondere für Kraftfahrzeuge ist.

4. Verfahren nach Anspruch 1, **dadurch gekennzeichnet, dass**
- das mit der Kunststoffmatrix (17) versehene metallische Hohlprofil (11) aus dem Spritzpress-Werkzeug (30) entformt wird und an den Randbereichen (50) der Ummantelung (12) beschnitten wird.

5. Verfahren nach Anspruch 1,
**dadurch gekennzeichnet, dass**
im inneren Hohlraum (18) ein Fluid, insbesondere im flüssigen oder gasförmigen Zustand eingebracht und mit dem Innendruck (P_{I}) beaufschlagt wird.

## Claims

1. A method for producing a hybrid material component (10) having a metallic hollow profile (11) and a casing (12) arranged thereon, the method comprising the steps:
- producing the metallic hollow profile (11) having a predetermined cross-sectional shape and a predetermined profile course, wherein the metallic hollow profile (11) is produced by an internal high-pressure forming process
- producing a casing (12) at least on one portion (13) of an outer surface (14) of the metallic hollow profile (11), wherein the casing (12) is formed from a plastics material reinforced with continuous fibres (16, 19), wherein the continuous fibres (16, 19) are especially carbon, aramid and/or glass fibres, and after the production of the metallic hollow profile (11), the continuous fibres (16, 19) are applied at least to a predetermined portion (13) of the outer surface (14) of the metallic hollow profile (11), and the metallic hollow profile (11) with the continuous fibres (16, 19) arranged thereon is introduced into a transfer mould (30), especially into a resin transfer moulding tool, and a plastics material matrix (17), especially a resin is applied at least in the portion in which the continuous fibres (16, 19) are arranged, and the plastics material matrix (17) is then cured into a moulding, **characterised in that**
- the continuous fibres (16, 19) are applied to the predetermined portion (13) of the metallic hollow profile (11) **in that** the continuous fibres (16, 19) are braided and/or wound around said portion, wherein at least during the application of the plastics material matrix (17), an internal pressure (P_{I}) which counteracts an external transfer moulding pressure (P_{A}) is generated in an inner cavity (18) of the metallic hollow profile (11).

2. A method according to claim 1, **characterised in that**
- at least one of the continuous fibres (16, 19) is formed as a standing fibre (16) and is substantially arranged in the longitudinal direction (L) of the metal hybrid component (10).

3. A method according to any of the preceding claims, **characterised in that** the metal hybrid component (10) is a crash-relevant structural component, especially for motor vehicles.

4. A method according to claim 1, **characterised in that**
- the metallic hollow profile (11), provided with the plastics material matrix (17) is removed from the transfer mould (30) and is trimmed along the peripheral regions (50) of the casing (12).

5. A method according to claim 1, **characterised in that**
a fluid is introduced, especially in a liquid or gaseous state, into the internal cavity (18) and is charged with the internal pressure (P_{I}).

## Revendications

1. Procédé d'obtention d'une pièce en matériau hybride (10) comprenant un profilé métallique creux (11) ainsi qu'une enveloppe (12) située sur celui-ci comprenant des étapes consistant à :
- fabriquer le profilé métallique creux (11) avec une section de forme prédéfinie et un tracé prédéfini, le profilé métallique creux (11) étant obtenu par la mise en oeuvre d'un procédé de formage haute pression interne,
- fabriquer une enveloppe (12) sur au moins un segment (13) de la surface externe (14) du profilé métallique creux (11), cette enveloppe (12) étant réalisée en un matériau synthétique renforcé par des fibres sans fin (16, 19), les fibres sans fin (16, 19) étant en particulier des fibres de carbone, des fibres d'aramide et/ou des fibres de verre, et, après la fabrication du profilé métallique creux (11), les fibres sans fin (16, 19) étant appliquées sur au moins un segment prédéfini (13) de la surface extérieure (14) de ce profilé métallique creux, et le profilé métallique creux (11) étant introduit avec les fibres sans fin (16, 19) appliquées sur celui-ci dans un outil de filage (30), en particulier dans un outil de moulage par transfert de résine, et, au moins dans le segment sur lequel sont situées les fibres (16, 19), une matrice en matériau synthétique (17) en particulier une résine étant appliquée puis la matrice en matériau synthétique (17) moulé étant durcie pour obtenir une pièce moulée,
**caractérisé en ce que**
les fibres sans fin (16, 19) sont appliquées sur le segment prédéfini (13) du profilé métallique creux (11) sous la forme d'une tresse et/ou d'une bobine, et, au moins pendant l'application de la matrice en matériau synthétique (17) on engendre, dans une cavité interne (18) du profilé métallique creux (11), une pression interne (P_{I}) qui s'oppose à la pression de filage externe (P_{A}).

2. Procédé conforme à la revendication 1,
**caractérisé en ce que**
au moins l'une des fibres sans fin (16, 18) est réalisée sous la forme d'une fibre d'àme (16), et est essentiellement située dans la direction longitudinale (L) de la pièce métallique hybride (10).

3. Procédé conforme à l'une des revendications précédentes,
**caractérisé en ce que**
la pièce métallique hybride (10) est une pièce de structure sollicitée lors d'une collision en particulier pour des véhicules automobiles.

4. Procédé conforme à la revendication 1,
**caractérisé en ce que**
le profilé métallique creux (11) équipé de la matrice en matériau synthétique (17) est démoulé de l'outil de filage (30) et est découpé sur les zones de bord (50) de l'enveloppe (12).

5. Procédé conforme à la revendication 1,
**caractérisé en ce qu'**
un fluide en particulier à l'état liquide ou à l'état gazeux est introduit dans la cavité interne (18) et est soumis à la pression interne (P_{I}).
